# EUROPÄISCHE PATENTSCHRIFT

(11) **EP 4 530 770 B1**
(45) Veröffentlichungstag und Bekanntmachung des Hinweises auf die Patenterteilung: **18.11.2026**
(21) Anmeldenummer: 24186807.4
(22) Anmeldetag: 05.07.2024
(51) Int. Cl.: G05B 19/4065, B23F 23/06, B23F 23/12, B23Q 17/00

(54) **WERKZEUGMASCHINE, INSBESONDERE VERZAHNMASCHINE**
MACHINE TOOL, IN PARTICULAR GEAR CUTTING MACHINE
MACHINE-OUTIL, NOTAMMENT MACHINE À TAILLER LES ENGRENAGES

(30) Priorität: 29.09.2023 DE 102023126669
(43) Veröffentlichungstag der Anmeldung: 02.04.2025
(73) Patentinhaber: Liebherr-Verzahntechnik GmbH, 87437 Kempten (DE)
(72) Erfinder: Pruschek, Peter, 87437 Kempten (DE); Diepolder, Jürgen, 87437 Kempten (DE); Schollenbruch, Uli, 87437 Kempten (DE); Martin, Alexander, 87437 Kempten (DE); Gabler, Martin, 87437 Kempten (DE)
(74) Vertreter: Lorenz Seidler Gossel Part. mbB

(56) Entgegenhaltungen:
- EP-A1- 2 759 372
- EP-A1- 3 091 406
- EP-A1- 3 964 328
- EP-A2- 1 087 274
- WO-A1-2009/033919

## Beschreibung

Die vorliegende Erfindung betrifft eine Werkzeugmaschine, insbesondere eine Verzahnmaschine, mit einer rotatorischen Achse, welche eine Aufnahme aufweist, in welcher ein Werkzeug oder Werkstück einspannbar ist, wobei die Achse über einen Antrieb angetrieben wird.

Druckschrift WO 2009/033919 A1 zeigt ein Verfahren zur Prüfung der Passung bzw. Unwucht eines auswechselbar in einer Werkzeugspindel aufgenommenen Werkzeugs, wobei die Werkzeugspindel um eine Mittellängsachse drehbar gelagert ist und von einem Spindelantriebsmotor rotierend angetrieben wird. Das Verfahren umfasst die folgenden Schritte: Einsetzen des Werkzeugs auf die Werkzeugspindel; Einstellen der Werkzeugspindel auf eine Rotation um die Mittellängsachse mit einer definierten Drehfrequenz mittels des Spindelantriebsmotors; Analysieren eines Istwerts eines geregelten Antriebsstroms des Spindelantriebsmotors hinsichtlich des Frequenzanteils der Drehfrequenz; und Bestimmen, ob der Frequenzanteil der Drehfrequenz innerhalb eines Grenzbereichs liegt.

Druckschriften EP 1 087 274 A2, EP 3 964 328 A1 und EP 3 091 406 A1 zeigen weitere Verfahren zur Überwachung des Zustands oder der Position des Werkzeugs in der Werkzeugaufnahme.

Die korrekte Einspannung des Werkzeugs oder Werkstücks in der entsprechenden Aufnahme der Werkzeugmaschine ist für den sicheren Betrieb der Werkzeugmaschine jedoch ebenfalls von entscheidender Bedeutung. Liegt ein fehlerhafter Spannzustand und insbesondere eine zu geringe Spannkraft vor, kann dies zu einem deutlich verschlechterten Bearbeitungsergebnis und sogar erheblichen Beschädigungen der Achse, der Maschine und/oder des Wuchtsystems führen.

Die Spannkraft lässt sich jedoch üblicherweise nicht direkt bestimmen und daher auch der Spannzustand nicht unmittelbar überprüfen.

Aufgabe der vorliegenden Erfindung ist es daher, eine verbesserte Werkzeugmaschine zur Verfügung zu stellen.

Diese Aufgabe wird durch eine Werkzeugmaschine gemäß Anspruch 1 gelöst. Bevorzugte Ausgestaltungen der vorliegenden Erfindung sind Gegenstand der Unteransprüche.

Die vorliegende Erfindung umfasst eine Werkzeugmaschine, insbesondere Verzahnmaschine, mit einer rotatorischen Achse, welche eine Aufnahme aufweist, in welcher ein Werkzeug oder Werkstück einspannbar ist, wobei die Achse über einen Antrieb angetrieben wird, wobei die Werkzeugmaschine eine Steuerung zur Ansteuerung des Antriebs aufweist. Dabei weist die Steuerung erfindungsgemäß eine Funktion zur Überwachung und/oder Überprüfung des Spannzustands der Werkzeug- oder Werkstückaufnahme auf, wobei die Überprüfung und/oder Überwachung durch Bestimmung und Auswertung mindestens eines Parameters des Antriebs der Achse erfolgt.

Die Erfinder der vorliegenden Erfindung haben erkannt, dass sich durch Auswertung eines Parameters des Antriebs der Achse ein unzureichender Spannzustand der Achse erfassen lässt. Eine unmittelbare Messung der Spannkraft ist daher nicht notwendig, sondern der Spannzustand kann mittelbar über die Eigenschaften des Antriebs erkannt werden. Insbesondere kann eine solche Überwachung und/oder Überprüfung ohne zusätzliche Sensoren anhand der bereits vorhandenen Sensorik des Antriebs erfolgen.

Gemäß einer möglichen Ausgestaltung der vorliegenden Erfindung weist die Achse ein manuelles Spannsystem auf. Beispielsweise ist eine Spannpatrone im Dorn oder Lager angeordnet, welche durch manuelles Betätigen die Spannkraft erzeugt. Hier ist die vorliegende Erfindung von besonderem Vorteil, da es bei einer manuellen Spannung bisher keine Möglichkeit für die Maschinensteuerung gab, die Spannkraft zu erfassen oder zu überwachen.

Die vorliegende Erfindung ist aber auch für eine Achse mit einem automatischen Spannsystem einsetzbar, wo aber auch andere Möglichkeiten zur Überwachung der Spannkraft bestehen.

Erfindungsgemäß ist die Funktion hierbei so ausgestattet, dass sie einen unzureichenden Spannzustand erkennt, wobei es sich bei dem unzureichenden Spannzustand um einen Spannzustand mit nicht ausreichender Spannkraft der Einspannung handelt. Ein solcher unzureichender Spannzustand kann insbesondere dazu führen, dass sich der Antrieb stark erhitzt. Insbesondere kann durch den unzureichenden Spannzustand des Werkzeugs und/oder Werkstücks ein regelungstechnisch instabiler Zustand entstehen, welcher zu erheblichen Verlustleistungen und damit einer Erhitzung führt. Weiterhin kann eine Auflagefläche des Werkzeugs und/oder Werkstücks nicht plan auf einer Gegenauflagefläche der Aufnahme aufliegen und/oder das Werkzeug und/oder Werkstück nicht exakt kolinear mit der Achse ausgerichtet sein .

Gemäß einer möglichen Ausgestaltung der vorliegenden Erfindung weist die Achse ein automatisches Wuchtsystem auf. Hier ist die vorliegende Erfindung von besonderem Vorteil, weil dieses durch eine fehlerhafte Spannung besonders leicht beschädigt werden kann.

Gemäß einer möglichen Ausgestaltung der vorliegenden Erfindung ist vorgesehen, dass die Funktion einen mit dem Schwingungsverhalten der Achse korrelierenden Parameter des Antriebs bestimmt und auswertet, um einen unzureichenden Spannzustand zu erkennen. Die Erfinder der vorliegenden Erfindung haben erkannt, dass durch eine Auswertung des Schwingungsverhaltens der Achse ein unzureichender Spannzustand erkannt werden kann. Insbesondere kann ein Aufschwingen der Achse bei unzureichendem Spannzustand hierdurch verhindert werden, da eine durch den unzureichenden Spannzustand gegebene Schwingungsneigung der Achse durch die Überprüfung und/oder Überwachung erkannt werden kann.

Gemäß einer möglichen Ausgestaltung der vorliegenden Erfindung ist vorgesehen, dass die Funktion einen frequenzabhängigen Parameter des Antriebs der Achse bestimmt und auswertet, um den unzureichenden Spannzustand zu erkennen. Insbesondere ist vorgesehen, dass die Funktion einen frequenzabhängigen Parameter des Schwingungsverhaltens der Achse bestimmt und auswertet, um den unzureichenden Spannzustand zu erkennen.

Gemäß einer möglichen Ausgestaltung der vorliegenden Erfindung ist vorgesehen, dass die Funktion den Parameter in einem vorgegebenen Frequenzbereich auswertet. Hierdurch wird berücksichtigt, dass üblicherweise nicht alle Frequenzbereiche gleichermaßen aussagekräftig sind.

Gemäß einer möglichen Ausgestaltung der vorliegenden Erfindung ist vorgesehen, dass mindestens eine Grenze des ausgewerteten Frequenzbereichs in einer Bedienerschnittstelle der Steuerung vorgebbar ist. Hierdurch kann die Funktion an die jeweilige Maschine angepasst werden.

Gemäß einer möglichen Ausgestaltung der vorliegenden Erfindung erfolgt die Erfassung des Parameters bei einer vorgegebenen Grund-Drehzahl der Achse. Bei welcher Grund-Drehzahl die Erfassung erfolgt, ist für die Auswertung jedoch nicht entscheidend. Bevorzugt wird der Grund-Drehzahl für die Messung ein Rauschen überlagert.

Gemäß einer möglichen Ausgestaltung der vorliegenden Erfindung ist vorgesehen, dass die Funktion den Parameter auf Überschreiten eines Grenzwertes überprüft. Die Erfinder haben erkannt, dass ein solches relativ einfach zu implementierendes Vorgehen ausreicht, um unzureichende Spannzustände zu erkennen.

Gemäß einer möglichen Ausgestaltung der vorliegenden Erfindung ist vorgesehen, dass der Grenzwert in einer Bedienerschnittstelle der Steuerung vorgebbar ist.

Gemäß einer möglichen Ausgestaltung der vorliegenden Erfindung ist vorgesehen, dass die Steuerung einen Achsregler zur Regelung der Drehzahl der Achse aufweist.

Gemäß einer möglichen Ausgestaltung der vorliegenden Erfindung ist vorgesehen, dass die Funktion einen Parameter des Schwingungsverhaltens der drehzahlgeregelten Achse bestimmt.

Gemäß einer möglichen Ausgestaltung der vorliegenden Erfindung ist vorgesehen, dass ein Ist-Drehzahlsignal des Antriebs in die durch die Funktion durchgeführte Auswertung eingeht. Die Ist-Drehzahl wird dabei bei einer drehzahlgeregelten Achse ohnehin bestimmt und das entsprechende Signal steht daher im Achsregler zur Verfügung. Insbesondere wird hierbei im Rahmen der Auswertung das Ist-Drehzahlsignal in seine Frequenzanteile zerlegt.

Gemäß einer möglichen Ausgestaltung der vorliegenden Erfindung ist vorgesehen, dass die Funktion einen Parameter des Übertragungsverhalten der Drehzahlregelstrecke des Achsreglers bestimmt und auswertet. Dieses Übertragungsverhalten lässt insbesondere Rückschlüsse auf das Schwingungsverhalten der Achse zu.

Gemäß einer möglichen Ausgestaltung der vorliegenden Erfindung ist vorgesehen, dass das Verhältnis zwischen Soll-Strom und/oder Soll-Drehmoment und Ist-Drehzahl des Antriebs bestimmt wird. Die Erfinder haben erkannt, dass das Verhältnis zwischen Soll-Strom und/oder Soll-Drehmoment und Ist-Drehzahl des Antriebs einen besonderes guten Rückschluss auf das Schwingungsverhalten der Achse und eine zuverlässige Erkennung eines unzureichenden Spannzustands erlaubt.

Insbesondere wird hierbei das Verhältnis zwischen Soll-Strom und/oder Soll-Drehmoment und Ist-Drehzahl des Antriebs für unterschiedliche Frequenzen bestimmt, insbesondere für unterschiedliche Anregungsfrequenzen.

Gemäß einer möglichen Ausgestaltung der vorliegenden Erfindung ist vorgesehen, dass die Funktion den Frequenzgang der Drehzahlregelstrecke erfasst und auswertet.

Gemäß einer möglichen Ausgestaltung der vorliegenden Erfindung ist vorgesehen, dass die Funktion den Parameter der Achse in einem Messdurchlauf bestimmt. Die Erfassung erfolgt daher nicht im laufenden Betrieb der Achse, sondern bevorzugt vor Aufnahme des Betriebs in einem eigenen Messdurchlauf.

Gemäß einer möglichen Ausgestaltung der vorliegenden Erfindung ist vorgesehen, dass es sich bei dem Parameter um einen frequenzabhängigen Parameter handelt und die Funktion den Parameter durch Anregung der Achse mit unterschiedlichen Frequenzen bestimmt.

Gemäß einer möglichen Ausgestaltung der vorliegenden Erfindung ist vorgesehen, dass die Anregung durch Aufschalten eines Signals auf ein Soll-Drehmoment des Antriebs erfolgt, insbesondere ein Signal, welches eine Mehrzahl von Frequenzanteilen aufweist, insbesondere durch Aufschalten von Rauschen.

Gemäß einer möglichen Ausgestaltung der vorliegenden Erfindung ist vorgesehen, dass die Funktion bei Erkennen eines unzureichenden Spannzustands den weiteren Betrieb der Achse sperrt. Hierdurch wird eine unzureichende Bearbeitungsqualität und eine Beschädigung der Maschine durch einen Betrieb mit unzureichend gespanntem Werkzeug und/oder Werkstück vermieden.

Gemäß einer möglichen Ausgestaltung der vorliegenden Erfindung ist vorgesehen, dass die Funktion bei Erkennen eines unzureichenden Spannzustands eine Ausgabe auf einer Benutzerschnittstelle der Werkzeugmaschine vornimmt. Insbesondere kann es sich bei der Ausgabe um eine Aufforderung an den Benutzer handeln, das Werkzeug und/oder Werkstück erneut zu spannen.

Gemäß einer möglichen Ausgestaltung der vorliegenden Erfindung ist vorgesehen, dass die Funktion so eingerichtet ist, dass der Benutzer das erneute Spannen bestätigen muss, woraufhin die Funktion die Prüfung des Spannzustands erneut vornimmt.

Gemäß einer möglichen Ausgestaltung der vorliegenden Erfindung ist vorgesehen, dass eine Benutzerschnittstelle der Werkzeugmaschine so eingerichtet ist, dass sie den Bediener vor einem Beginn der Bearbeitung auffordert, anzugeben, ob das Werkzeug und/oder Werkstück ausgespannt wurde, wobei die Funktion die Prüfung des Spannzustands vornimmt, wenn der Bediener eingibt, dass das Werkzeug und/oder Werkstück ausgespannt wurde.

Die vorliegende Erfindung ist zunächst für beliebige Werkzeugmaschinen einsetzbar. Bevorzugt wird die Funktion hierbei für die Werkzeugaufnahme eingesetzt.

Besonders vorteilhaft kommt die vorliegende Erfindung bei Verzahnmaschinen zum Einsatz. Beispielsweise kann es sich um eine Verzahnungsfräs- oder Verzahnungsschleifmaschine handeln.

Insbesondere kann die Erfindung bei Verzahnmaschinen zum Einsatz kommen, bei welchen die Werkzeugaufnahme an einem Bearbeitungskopf angeordnet ist, welcher über mehrere Linearachsen relativ zur Werkstückaufnahme bewegbar ist. Bevorzugt wird hierbei mindestens eine der Linearachsen während der Verzahnbearbeitung NC-gesteuert bewegt, um das Werkzeug gegenüber dem Werkstück so zu bewegen, dass die Verzahnung erzeugt wird.

Gemäß einer möglichen Ausgestaltung der vorliegenden Erfindung ist vorgesehen, dass es sich bei der Werkzeug- oder Werkstückaufnahme um eine Kegel-Aufnahme handelt, insbesondere um eine Hohlschaftkegelaufnahme oder eine Steilkegelaufnahme.

Bei der erfindungsgemäßen Werkzeugmaschine handelt es sich in einer möglichen Ausgestaltung um eine Verzahnschleifmaschine und/oder Verzahnfräsmaschine. Beispielsweise kann die Steuerung hierbei eine Funktion zur Durchführung einer Wälzschleifbearbeitung und/oder Wälzfräsbearbeitung aufweisen. Bei dem Werkzeug kann es sich hierbei um ein Schleifwerkzeug oder Fräswerkzeug handeln, insbesondere eine Schleifschnecke oder einen Wälzfräser.

Das Werkzeug oder Werkstück kann in der Werkzeug- oder Werkstückaufnahme einseitig oder beidseitig einspannbar sein. Bevorzugt ist hierbei ein Gegenhalter vorgesehen, welcher ein beidseitiges Einspannen erlaubt.

In einer möglichen Ausgestaltung ist die Werkzeug- oder Werkstückaufnahme so ausgestaltet, dass das Einspannen des Werkzeugs oder Werkstücks manuell erfolgt.

Die Durchführung der Funktion wird bevorzugt durch vorgegebene Triggerereignisse, welche von der Steuerung abgefragt werden, ausgelöst. Wird die Funktion aktiviert, führt sie die Erfassung und Auswertung bevorzugt automatisiert durch.

Die Steuerung umfasst in einer möglichen Ausgestaltung einen Mikroprozessor und einen nicht-flüchtigen Speicher, auf welchem ein Softwareprogramm abgespeichert ist. Das Softwareprogramm enthält Befehle, welche, werden sie auf dem Mikrocomputer ausgeführt, die oben beschriebene Steuerung der Werkzeugmaschine vornehmen und insbesondere die erfindungsgemäße Funktion auf der Steuerung implementieren. Die Steuerung steht insbesondere mit mindestens einem Sensor der Achse und/oder des Antriebs in Signalverbindung. Weiterhin steht die Steuerung bevorzugt mit einer Bedienerschnittstelle in Verbindung.

Die vorliegende Erfindung umfasst weiterhin ein Softwareprogramm für eine Werkzeugmaschine, wie sie oben beschrieben wird, mit Befehlen, welche die erfindungsgemäße Steuerung und/oder die erfindungsgemäße Funktion zur Überwachung und/oder Überprüfung des Spannzustands der Werkzeug- oder Werkstückaufnahme auf der Steuerung der Werkzeugmaschine implementieren, wenn sie auf einem Mikroprozessor der Steuerung ablaufen. Das Softwareprogramm kann es dabei insbesondere erlauben, die erfindungsgemäße Funktion auf einer bestehenden Werkzeugmaschine zu implementieren.

Die vorliegende Erfindung umfasst weiterhin ein Verfahren zum Betrieb einer Werkzeugmaschine, insbesondere Verzahnmaschine, wobei die Werkzeugmaschine eine Aufnahme aufweist, in welcher ein Werkzeug oder Werkstück einspannbar ist, wobei die Achse über einen Antrieb angetrieben wird,
mit den Schritten:
- Bestimmen mindestens eines Parameters der Achse
- Überwachung und/oder Überprüfung des Spannzustands der Werkzeug- oder Werkstückaufnahme durch Auswertung des Parameters.

Das Verfahren kann dabei insbesondere so durchgeführt werden, wie dies bereits oben im Hinblick auf die Werkzeugmaschine beschrieben wurde. Insbesondere erfolgt das Verfahren hierbei auf einer Werkzeugmaschine, wie sie oben beschrieben wurde.

Die vorliegende Erfindung wird nun anhand von Ausführungsbeispielen und Zeichnungen näher erläutert.

Dabei zeigen:
- Fig. 1: ein Ausführungsbeispiel einer erfindungsgemäßen Werkzeugmaschine,
- Fig. 2: ein Ausführungsbeispiel einer Achse einer erfindungsgemäßen Werkzeugmaschine,
- Fig. 3: ein Prinzipdarstellung eines Achsreglers einer Steuerung einer erfindungsgemäßen Werkzeugmaschine,
- Fig. 4: ein Diagramm des Frequenzgangs einer Achse bei unterschiedlichen Werkzeugdurchmessern,
- Fig. 5: ein Diagramm des Frequenzgangs einer Achse bei unterschiedlichen Spannzuständen bei einem ersten Werkzeugdurchmesser, und
- Fig. 6: ein Diagramm des Frequenzgangs einer Achse bei unterschiedlichen Spannzuständen bei einem zweiten Werkzeugdurchmesser.

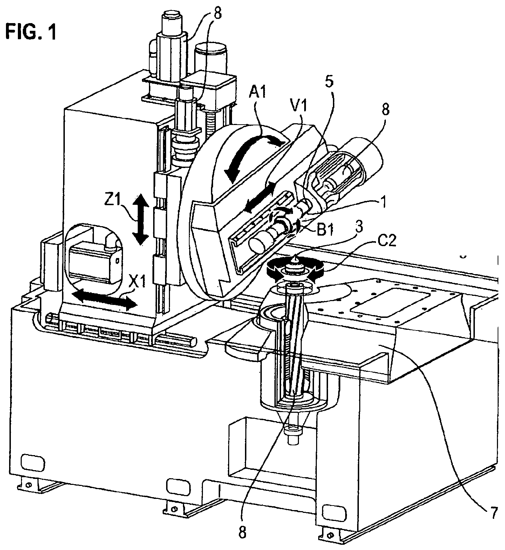

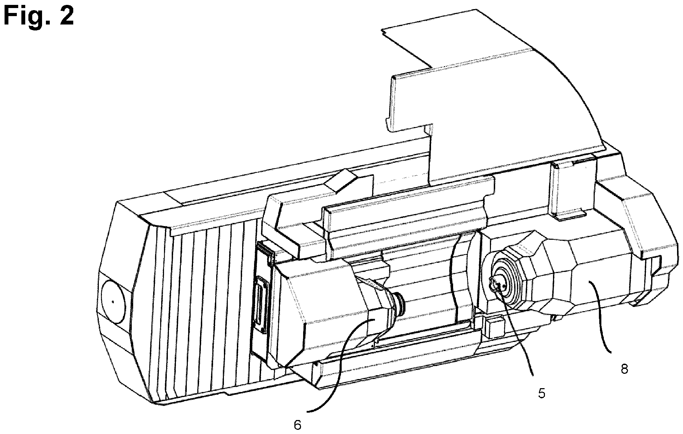

Fig. 1 und 2 zeigen ein Ausführungsbeispiel einer Werkzeugmaschine und einer Achse einer solchen Werkzeugmaschine, bei welcher die vorliegende Erfindung in einer bevorzugten Ausgestaltung zum Einsatz kommt. Bei der Werkzeugmaschine handelt es sich im Ausführungsbeispiel um eine Verzahnmaschine. Die erfindungsgemäße Funktion kann jedoch auch bei anderen Werkzeugmaschinen zum Einsatz kommen.

Die Maschine weist einen Bearbeitungskopf 1 auf, an welchem die rotatorische Achse B1 angeordnet ist, über welche das Werkzeug in Rotation versetzt wird. Die Achse B1 weist eine Werkzeugaufnahme 5 auf, in welche das Werkzeug einspannbar ist, und wird durch den Antrieb 8 angetrieben. Die Werkzeugaufnahme 5 ist hierbei unmittelbar an der Achse des Antriebs angeordnet.

Weiterhin weist die Maschine eine Achse C2 mit einer Werkstückaufnahme 3 auf, welche über einen Antrieb 8 angetrieben wird. Die Achse C2 ist hierbei auf einem Maschinenbett 7 angeordnet.

Der Bearbeitungskopf 1 ist über die Linearachse X1 in einer Richtung senkrecht zur C2-Achse verfahrbar, um das in der Werkzeugaufnahme aufgenommene Werkzeug an ein in der Werkstückaufnahme aufgenommene Werkstück heranzufahren. Die Linearachse X1 definiert daher die Eingriffstiefe. Weiterhin ist eine Linearachse Z1 vorgesehen, durch welche der Bearbeitungskopf in einer Richtung parallel zur C2-Achse entlang der Breite des Werkstücks verfahrbar ist.

Im Ausführungsbeispiel ist der Bearbeitungskopf um eine A1-Achse verschwenkbar, welche parallel zur X1-Achse verläuft. Weiterhin ist die Werkzeugaufnahme in einer Richtung parallel zu ihrer Rotationsachse über die Linearachse V1 vershiftbar. Alternativ hierzu könnte die Maschine auch eine Y1-Achse aufweisen, welche senkrecht auf der X1-Achse und der Z1-Achse steht, und an welcher die A-Achse angeordnet ist.

Fig. 2 zeigt ein Ausführungsbeispiel der Achse B1 in einer vergrößerten Darstellung. Diese weist ein manuell betätigtes Spannsystem zum Einspannen des Werkzeugs auf.

In Fig. 2 ist hier die Werkzeugaufnahme 5 mit einem Spannfutter gezeigt. Es kann sich hierbei z.B. um eine Steilkegel- oder Hohlschaftkegel-Aufnahme handeln. Das manuelle Spannen erfolgt beispielsweise über eine im Werkzeugdorn vorgesehene Spannpatrone, welche manuell bspw. über einen Inbus-Schlüssel gespannt wird. Im Ausführungsbeispiel weist der Bearbeitungskopf einen Gegenhalter 6 für die Werkzeugaufnahme 5, um das Werkzeug zweiseitig einspannen zu können. Der Gegenhalter ist entlang einer Linearführung parallel zur B1-Achse verschieblich angeordnet. Die Achse B1 weist weiterhin automatisches Wuchtsystem auf.

Die Steuerung der Werkzeugmaschine umfasst im Ausführungsbeispiel einen Achsregler mit einer Drehzahlregelung für die B1-Achse. Hierfür weist die Achse und hierbei bevorzugt der Antrieb einen Drehzahlsensor auf, dessen Signal in einer Regelschleife zurückgeführt wird. Insbesondere handelt es sich bei dem Drehzahlsensor um ein Winkelmesssystem bzw. einen Drehgeber. Ein entsprechender Regler kann auch für die C2-Achse eingesetzt werden.

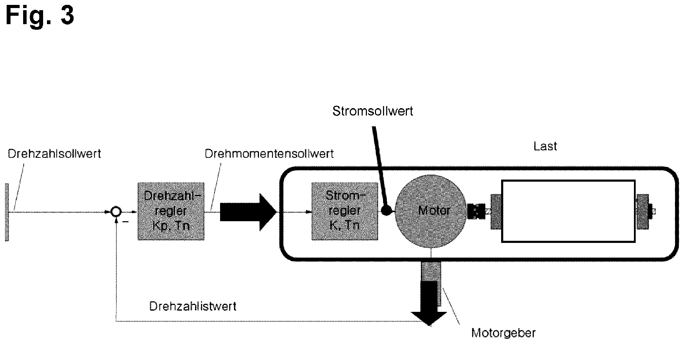

Fig. 3 zeigt eine Prinzipdarstellung eines solchen Achsreglers mit einer Regelschleife für die Drehzahlregelung. Wie in Fig. 3 ersichtlich wird dem Achsregler eine Drehzahlsollwert vorgegeben, auf welchen der Antrieb geregelt werden soll. Weiterhin weist der Antrieb einen Drehzahlsensor auf, welcher hier als Motorgeber bezeichnet ist und den Drehzahlistwert erfasst. Dieser Drehzahlistwert wird in einer Regelschleife zurückgeführt und in einem Differenzglied mit dem Drehzahlsollwert verglichen. Aus der Differenz zwischen Drehzahlistwert und Drehzahlsollwert bestimmt der Drehzahlregler ein Drehmomentensollwert des Antriebs, aus welchem im Stromregler ein Stromsollwert bestimmt wird, welcher zur Ansteuerung des Motors dient.

Die erfindungsgemäße Funktion zur Überwachung und/oder Überprüfung des Spannzustands der Werkzeug- oder Werkstückaufnahme bestimmt im Ausführungsbeispiel einen frequenzabhängigen Parameter des Antriebs, welcher mit dem Schwingungsverhalten der Achse korreliert. Insbesondere wird hierbei das Übertragungsverhalten des Drehzahlreglers in einem Messdurchgang bei unterschiedlichen Frequenzen der Anregung bestimmt und ausgewertet.

Die Drehzahlregelstrecke und insbesondere die Übertragungsstrecke zwischen Drehmoment und Drehzahl wird hierbei als das zu regelnde System zunächst näher betrachtet. Der Drehzahlregelkreis hat die Aufgabe, die Motordrehzahl zu regeln. Hierzu gibt er ein Drehmoment aus und erwartet eine Drehzahländerung.

Ob sich die Drehzahl leicht verändern lässt, hängt von der gesamten Massenträgheit in der Regelstrecke ab. Bei großer Trägheit wird sich eine kleine Drehzahlantwort ergeben. Die Amplitude aus dem Verhältnis von Drehzahl/Drehmoment ist also gering. Bei den Resonanzfrequenzen kommt es dagegen zu einer besonders großen Reaktion der Motordrehzahl. Wegen der dynamischen Rückwirkung der Last auf den Motor existieren darüber hinaus Tilgerfrequenzen, bei denen die Motordrehzahl einbricht.

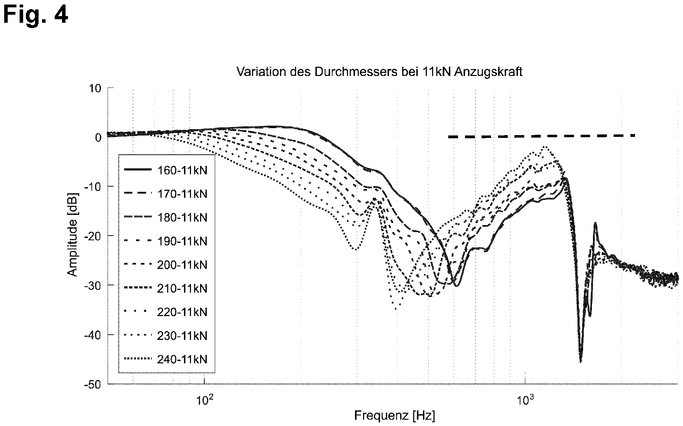

Dieses Verhalten kann in einem Bodediagramm der Drehzahlregelstrecke, wie es in Fig. 4 bis 6 genutzt wird, auf einen Blick dargestellt werden. Der in den Diagrammen dargestellte Frequenzgang beschreibt hierbei das Übertragungsverhalten der Drehzahlregelstrecke in Abhängigkeit von der Frequenz, wobei es sich bei dem Eingangssignal um das Drehmoment und bei dem Ausgangssignal um die Istdrehzahl handelt. Hierbei kann anstelle des Drehmoment- oder Stromsollwerts auch der Stromistwert gemessen werden, um lediglich den mechanischen Teil der Regelstrecke zu identifizieren. Der gemessene Strom kann leicht mit der Drehmomentenkonstante in ein Drehmoment umgerechnet werden. Zur Bestimmung des Diagramms werden die Signale in den Frequenzbereich transformiert.

In einem Ausführungsbeispiel wird während des Messdurchgangs
A) Die Reglereinstellung abgeschwächt
B) die Achse mit konst. Rotationsgeschwindigkeit betrieben
C) Ein Rauschen auf den Momentensollwert addiert
D) Die Istwerte von Motordrehzahl und Drehmoment gemessen.
E) Die Gemessenen Werte gemittelt und als Bodediagramm
dargestellt.

Das Bodediagramm stellt den gemessenen Übertragungsfrequenzgang logarithmisch über der Frequenz dar.

Die Achse wird beispielsweise mit einem Rauschsignal, genauer einer PRBS (pseudo random binary sequence), angeregt. Dabei wird ein Signal erzeugt, das ähnlich dem "weißen Rauschen" sehr viele Frequenzanteile in gleichen Verhältnissen (konstantes Leistungsdichtespektrum) enthält. Dadurch ist es möglich, in einem Signal die gesamte interessierende Bandbreite auf einmal anzuregen.

Ein solcher Messdurchgang ist in vielen Antriebssteuerungen bereits implementiert, da sich anhand des Bodediagramms die Parameter des Reglers optimieren lassen.

Erfindungsgemäß werden die Ergebnisse der Messung durch die Steuerung nunmehr jedoch ausgewertet, um einen unzureichenden Spannzustand zu erfassen.

Fig. 4 bis 6 zeigen Ergebnisse von Testmessungen an einer Spindel mit unterschiedlichen Werkzeugdurchmessern und Spannkräften. Dargestellt ist jeweils der Drehzahlfrequenzgang (von Soll-Strom (Drehzahlregler-Ausgang) zur Ist-Drehzahl).

Der Frequenzgang hat somit Integrator-Verhalten und grundsätzlich darf er die 0 dB-Linie überschreiten, ohne dass dies eine Konturverletzung am Werkstück darstellt (der Frequenzgang zeigt nicht unmittelbar das Lageverhalten). Dennoch wird davon ausgegangen, dass das Überschreiten der 0 dB-Linie ein Indiz ist, anhand dessen ein übermäßiges Schwingen detektiert werden kann. Dies soll allerdings erst ab 300 Hz bewertet werden, da ein Überschreiten bei niedrigeren Frequenzen auch bei ordnungsgemäßem Spannvorgang normal ist.

Bei den gezeigten Frequenzgängen ist zudem zu bedenken, dass der Verlauf mit einem Butterworth-Filter 3. Ordnung mit einer Eckfrequenz, die einem Viertel der Abtastfrequenz entspricht, stark geglättet ist.

Wie aus dem Diagramm in Fig. 4 erkennbar ist, hat der Werkzeugdurchmesser zwar einen erheblichen Einfluss auf den Frequenzgang. Bei Vorliegen eines korrekten Spannzustands, wie er bspw. bei einer Spannung mit 11 kN im Ausführungsbeispiel vorliegt, überschreitet der Wert jedoch oberhalb einer vorgegebenen Untergrenze von bspw. 300 Hz die 0dB-Line in keinem Fall.

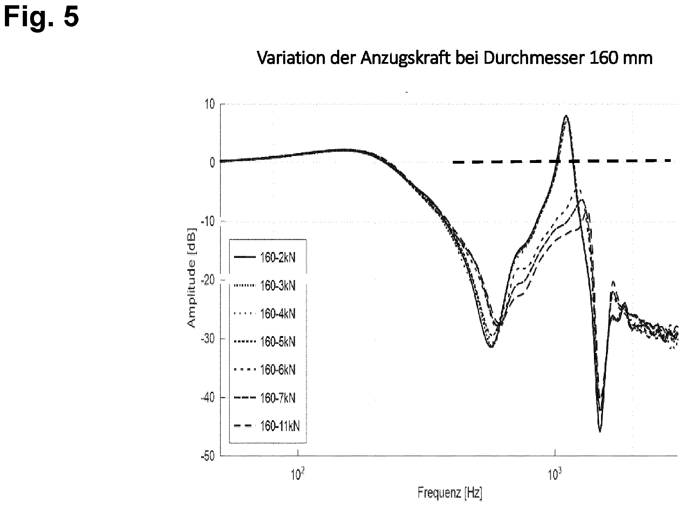

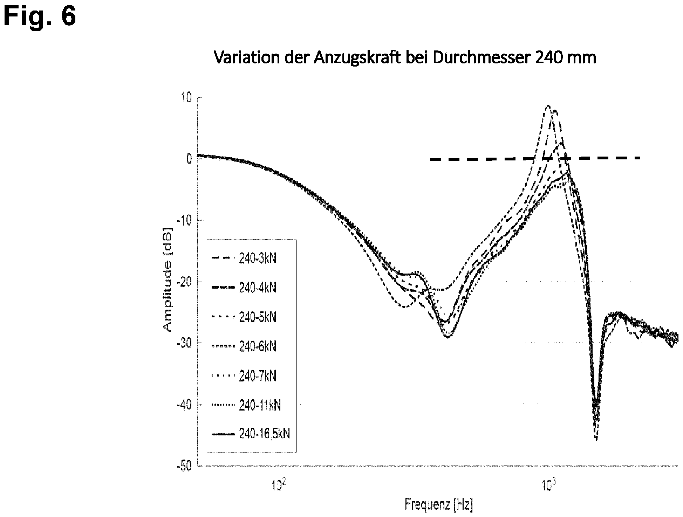

Die Diagramme in Fig. 5 und 6 zeigen dagegen den Verlauf des Frequenzgangs für unterschiedliche Spannzustände bei zwei unterschiedlichen Werkzeugen. Hierbei zeigt sich, dass bei unzureichender Spannung (Spannkraft unterhalb von 6 kN) der Parameter an der Resonanzstelle die 0 dB-Linie überschreitet. Die Versuche zeigen daher, dass eine Erkennung fehlerhafter Spannzustände anhand des Frequenzgangs möglich ist.

Die Funktion Erkennung fehlerhafter Spannzustände kann wie folgt implementiert werden:
Konfiguration des Messdurchlaufs für die B1-Achse (bzw. Spindel) sowie Anlegen eines Parameters in der Maschinenkonfiguration, um die Startfrequenz für die Suche zu definieren. Bevorzugt ist die Startfrequenz hierbei veränderbar, bevorzugt aber nur für einen Service-Techniker.

Je nach Ergebnis der der Messung wird die Steuerung wahlweise
- bei negativer Rückmeldung: Auslösen einer zu vom Anwender zu quittierenden NC-Fehlermeldung ("Bitte Werkzeugspannung prüfen") und anschließend erneutes Durchführen der Messung
   oder
- bei positiver Rückmeldung: Bearbeitungsablauf fortsetzen.

Hierbei kann vorgesehen sein, dass für den Fall, dass mehrmals nacheinander ein negatives Ergebnis ermittelt wird, diese Schleife durchbrochen wird, indem dem Anwender statt der o.g. Fehlermeldung eine Meldung angezeigt wird, dass das Spannverhalten nicht den Vorgaben entspricht und eine Fortsetzung mit dem aktuellen Spannverhalten auf eigene Gefahr erfolgt. Der Bediener muss diese Meldung quittieren, um fortzufahren.

Weiterhin wird das Ergebnis der Auswertung und das Quittieren der Fehlermeldungen in der Steuerung protokolliert.

Die Auswertung kann wie folgt erfolgen:
- Parsen der aus der Messung resultierenden Daten. Implementieren des Glättungsfilters und Durchführen der Glättung.
- Ermitteln, ob in den geglätteten Werten oberhalb der Startfrequenz ein Wert > 0 dB vorliegt.
- Wenn dem so ist, die "Anfrage" der NC negativ quittieren. Wenn dem nicht so ist, die "Anfrage" der NC positiv quittieren.

Als Trigger der Funktion können beispielsweise folgende Ereignisse definiert werden:
a. Werkzeugwechselposition (obligatorisch)
b. Durchmesseränderung des Werkzeugs (optional)
c. Sensorsignal nach Werkzeugwechsel (optional)

Insbesondere erfolgt hierbei eine Abfrage an den Bediener, ob ein Werkzeugwechsel erfolgt ist. Wird dies bejaht, wird die Funktion getriggert.

Die Durchführung der Messprozedur ist bevorzugt nur bei geschlossener Tür möglich. Sie erfolgt bevorzugt bei einer vorgegebenen, konstanten Drehzahl der Achse, welcher das Rauschsignal überlagert wird.

Bei der Auswertung der Messung kann die 0-dB-Linie (ggf. mit einer gewissen Amplitudenreserve) als feste Grenze dienen. Alternativ kann die Grenze in der Maschinensteuerung variabel vorgebbar und/oder parametrierbar sein.

Aufgrund des Messergebnisses wird bei Erkennen eines ungenügenden Spannzustands und/oder bei Überschreitung des Grenzwerts die Achse stillgesetzt und eine Meldung ausgegeben, die nur durch ein weiteres erfolgreiches Durchführen der Messung quittiert werden kann. Die Meldung umfasst bevorzugt eine Aufforderung zur mechanischen Überprüfung und/oder eine Anzeige von Parametern.

Das Überschreiten des Grenzwertes, insbesondere der 0-dB-Linie, wird mit Zeitstempel geloggt.

Die vorliegende Erfindung erlaubt hierdurch die automatische Erkennung fehlerhafter Spannzustände der Werkzeug- und/oder Werkstückachse (B1-Achse und/oder C2-Achse) an Werkzeugmaschinen. Insbesondere ergibt sich eine zuverlässige, automatische Erkennung von fehlerhaften Spannzuständen der Werkzeugschnittstelle an Schleifköpfen sowie eine Verhinderung eines unzulässigen Aufschwingens der B1-Achse und/oder der C2-Achse. Durch ein definiertes Stillsetzen der Achse können unzureichende Bearbeitungsergebnisse und weitere Folgeschäden, die häufig zu hohen Gewährleistungskosten führen, verhindert werden. Es könnte auch für andere Achsen ein Maschinenschutz basierend auf der Lösung mittels Frequenzgang-Messung realisiert werden.

## Patentansprüche

1. Werkzeugmaschine, insbesondere Verzahnmaschine, mit einer rotatorischen Achse, welche eine Aufnahme aufweist, in welcher ein Werkzeug oder Werkstück einspannbar ist, wobei die Achse über einen Antrieb angetrieben wird, wobei die Werkzeugmaschine eine Steuerung zur Ansteuerung des Antriebs aufweist,
**dadurch gekennzeichnet,**
**dass** die Steuerung eine Funktion zur Überwachung und/oder Überprüfung des Spannzustands der Werkzeug- oder Werkstückaufnahme aufweist, welche einen Spannzustand mit nicht ausreichender Spannkraft der Einspannung erkennt, wobei die Überprüfung und/oder Überwachung durch Bestimmung und Auswertung mindestens eines Parameters des Antriebs der Achse erfolgt.

2. Werkzeugmaschine nach Anspruch 1, wobei die Funktion einen mit dem Schwingungsverhalten der Achse korrelierenden Parameter des Antriebs bestimmt und auswertet, um einen unzureichenden Spannzustand zu erkennen.

3. Werkzeugmaschine nach Anspruch 1 oder 2, wobei die Funktion einen frequenzabhängigen Parameter des Antriebs der Achse bestimmt und auswertet, um den unzureichenden Spannzustand zu erkennen.

4. Werkzeugmaschine nach Anspruch 3, wobei die Funktion den Parameter in einem vorgegebenen Frequenzbereich auswertet, wobei bevorzugt mindestens eine Grenze des ausgewerteten Frequenzbereichs in einer Bedienerschnittstelle der Steuerung vorgebbar ist.

5. Werkzeugmaschine nach einem der Ansprüche 2 bis 4, wobei die Funktion den Parameter auf Überschreiten eines Grenzwertes überprüft, wobei der Grenzwert bevorzugt in einer Bedienerschnittstelle der Steuerung vorgebbar ist.

6. Werkzeugmaschine nach einem der vorangegangenen Ansprüche, wobei die Steuerung einen Achsregler zur Regelung der Drehzahl der Achse aufweist.

7. Werkzeugmaschine nach Anspruch 6, wobei die Funktion einen Parameter des Schwingungsverhaltens der drehzahlgeregelten Achse bestimmt, wobei bevorzugt ein Ist-Drehzahlsignal des Antriebs in die durch die Funktion durchgeführte Auswertung eingeht.

8. Werkzeugmaschine nach Anspruch 6 oder 7, wobei die Funktion einen Parameter des Übertragungsverhalten der Drehzahlregelstrecke des Achsreglers bestimmt und auswertet, insbesondere das Verhältnis zwischen Soll-Strom und/oder Soll-Drehmoment und Ist-Drehzahl des Antriebs, insbesondere den Frequenzgang der Drehzahlregelstrecke.

9. Werkzeugmaschine nach einem der vorangegangenen Ansprüche, wobei die Funktion den Parameter der Achse in einem Messdurchlauf bestimmt, wobei es sich bevorzugt um einen frequenzabhängigen Parameter handelt und die Funktion den Parameter durch Anregung der Achse mit unterschiedlichen Frequenzen bestimmt, wobei die Anregung bevorzugt durch Aufschalten eines Signals auf ein Soll-Drehmoment des Antriebs erfolgt, insbesondere ein Signal, welches eine Mehrzahl von Frequenzanteilen aufweist.

10. Werkzeugmaschine nach einem der vorangegangenen Ansprüche, wobei die Funktion bei Erkennen eines unzureichenden Spannzustands den weiteren Betrieb der Achse sperrt und/oder eine Ausgabe auf einer Benutzerschnittstelle der Werkzeugmaschine vornimmt, insbesondere eine Aufforderung an den Benutzer, das Werkzeug und/oder Werkstück erneut zu spannen.

11. Werkzeugmaschine nach Anspruch 10, wobei die Funktion so eingerichtet ist, dass der Benutzer das erneute Spannen bestätigen muss, woraufhin die Funktion die Prüfung des Spannzustands erneut vornimmt.

12. Werkzeugmaschine nach einem der vorangegangenen Ansprüche, wobei eine Benutzerschnittstelle der Werkzeugmaschine so eingerichtet ist, dass sie den Bediener vor einem Beginn der Bearbeitung auffordert, anzugeben, ob das Werkzeug und/oder Werkstück ausgespannt wurde, wobei die Funktion die Prüfung des Spannzustands vornimmt, wenn der Bediener eingibt, dass das Werkzeug und/oder Werkstück ausgespannt wurde.

13. Werkzeugmaschine nach einem der vorangegangenen Ansprüche, wobei es sich bei der Werkzeug- oder Werkstückaufnahme um eine Kegel-Aufnahme handelt, insbesondere um eine Hohlschaftkegelaufnahme oder eine Steilkegelaufnahme.

14. Softwareprogramm für eine Werkzeugmaschine nach einem der vorangegangenen Ansprüche, mit Befehlen, welche die Steuerung der Werkzeugmaschine und/oder die Funktion zur Überwachung und/oder Überprüfung des Spannzustands der Werkzeug- oder Werkstückaufnahme auf der Steuerung der Werkzeugmaschine implementieren, wenn sie auf einem Mikroprozessor der Steuerung ablaufen.

15. Verfahren zum Betrieb einer Werkzeugmaschine nach einem der vorangegangenen Ansprüche, wobei die Werkzeugmaschine eine Aufnahme aufweist, in welcher ein Werkzeug oder Werkstück einspannbar ist, wobei die Achse über einen Antrieb angetrieben wird,
mit den Schritten:
- Bestimmen mindestens eines Parameters der Achse
- Überwachung und/oder Überprüfung des Spannzustands der Werkzeug- oder Werkstückaufnahme durch Auswertung des Parameters.

## Claims

1. Machine tool, in particular gear cutting machine, with a rotary axis, which has a mount, in which a tool or workpiece is clampable, wherein the axis is driven via a drive, wherein the machine tool has a control system for controlling the drive, **characterized in that**
the control system has a function for monitoring and/or checking the clamping state of the tool or workpiece mount, which detects a clamping state with insufficient clamping force of the clamping, wherein the checking and/or monitoring takes place by determination and evaluation of at least one parameter of the drive of the axis.

2. Machine tool according to claim 1, wherein the function determines and evaluates a parameter of the drive correlating with the vibration behaviour of the axis in order to detect an insufficient clamping state.

3. Machine tool according to claim 1 or 2, wherein the function determines and evaluates a frequency-dependent parameter of the drive of the axis in order to detect the insufficient clamping state.

4. Machine tool according to claim 3, wherein the function evaluates the parameter in a predetermined frequency range, wherein preferably at least one limit of the evaluated frequency range is presettable in an operator interface of the control system.

5. Machine tool according to any one of claims 2 to 4, wherein the function checks the parameter for exceeding a limit value, wherein the limit value is preferably presettable in an operator interface of the control system.

6. Machine tool according to any one of the preceding claims, wherein the control system has an axis controller for controlling the rotational speed of the axis.

7. Machine tool according to claim 6, wherein the function determines a parameter of the vibration behaviour of the speed-controlled axis, wherein preferably an actual rotational speed signal of the drive is included in the evaluation carried out by the function.

8. Machine tool according to claim 6 or 7, wherein the function determines and evaluates a parameter of the transfer behaviour of the speed control system of the axis controller, in particular the ratio between setpoint current and/or setpoint torque and actual rotational speed of the drive, in particular the frequency response of the speed control system.

9. Machine tool according to any one of the preceding claims, wherein the function determines the parameter of the axis in a measurement run, wherein preferably it is a frequency-dependent parameter and the function determines the parameter by excitation of the axis with different frequencies, wherein the excitation preferably takes place by applying a signal to a setpoint torque of the drive, in particular a signal which has a plurality of frequency components.

10. Machine tool according to any one of the preceding claims, wherein upon detection of an insufficient clamping state, the function inhibits further operation of the axis and/or carries out an output on a user interface of the machine tool, in particular a prompt to the user to clamp the tool and/or workpiece again.

11. Machine tool according to claim 10, wherein the function is configured such that the user must confirm the renewed clamping, whereupon the function carries out the checking of the clamping state again.

12. Machine tool according to any one of the preceding claims, wherein a user interface of the machine tool is configured such that it prompts the operator before a start of machining to indicate whether the tool and/or workpiece was unclamped, wherein the function carries out the checking of the clamping state when the operator inputs that the tool and/or workpiece was unclamped.

13. Machine tool according to any one of the preceding claims, wherein the tool or workpiece mount is a taper mount, in particular a hollow taper shank mount or a steep taper mount.

14. Software program for a machine tool according to any one of the preceding claims, with instructions which implement the control system of the machine tool and/or the function for monitoring and/or checking the clamping state of the tool or workpiece mount on the control system of the machine tool when they run on a microprocessor of the control system.

15. Method for operating a machine tool according to any one of the preceding claims, wherein the machine tool has a mount, in which a tool or workpiece is clampable, wherein the axis is driven via a drive,
comprising the steps:
- determining at least one parameter of the axis
- monitoring and/or checking the clamping state of the tool or workpiece mount by evaluation of the parameter.

## Revendications

1. Machine-outil, en particulier machine de taillage d'engrenages, avec un axe rotatif, lequel présente un logement, dans lequel un outil ou une pièce peut être serré, dans laquelle l'axe est entraîné par l'intermédiaire d'un entraînement, dans laquelle la machine-outil présente une commande pour la commande de l'entraînement,
**caractérisée en ce que**
la commande présente une fonction pour la surveillance et/ou la vérification de l'état de serrage du logement d'outil ou de pièce, laquelle détecte un état de serrage avec une force de serrage non suffisante du serrage, dans laquelle la vérification et/ou la surveillance s'effectue par détermination et évaluation d'au moins un paramètre de l'entraînement de l'axe.

2. Machine-outil selon la revendication 1, dans laquelle la fonction détermine et évalue un paramètre de l'entraînement corrélé avec le comportement vibratoire de l'axe, afin de détecter un état de serrage insuffisant.

3. Machine-outil selon la revendication 1 ou 2, dans laquelle la fonction détermine et évalue un paramètre dépendant de la fréquence de l'entraînement de l'axe, afin de détecter l'état de serrage insuffisant.

4. Machine-outil selon la revendication 3, dans laquelle la fonction évalue le paramètre dans une plage de fréquences prédéfinie, dans laquelle de préférence au moins une limite de la plage de fréquences évaluée peut être prédéfinie dans une interface opérateur de la commande.

5. Machine-outil selon l'une quelconque des revendications 2 à 4, dans laquelle la fonction contrôle le paramètre quant au dépassement d'une valeur limite, dans laquelle la valeur limite peut de préférence être prédéfinie dans une interface opérateur de la commande.

6. Machine-outil selon l'une quelconque des revendications précédentes, dans laquelle la commande présente un régulateur d'axe pour la régulation de la vitesse de rotation de l'axe.

7. Machine-outil selon la revendication 6, dans laquelle la fonction détermine un paramètre du comportement vibratoire de l'axe régulé en vitesse de rotation, dans laquelle de préférence un signal de vitesse de rotation réelle de l'entraînement entre dans l'évaluation effectuée par la fonction.

8. Machine-outil selon la revendication 6 ou 7, dans laquelle la fonction détermine et évalue un paramètre du comportement de transfert de la chaîne de régulation de vitesse du régulateur d'axe, en particulier le rapport entre courant de consigne et/ou couple de consigne et vitesse de rotation réelle de l'entraînement, en particulier la réponse en fréquence de la chaîne de régulation de vitesse.

9. Machine-outil selon l'une quelconque des revendications précédentes, dans laquelle la fonction détermine le paramètre de l'axe dans un cycle de mesure, dans laquelle il s'agit de préférence d'un paramètre dépendant de la fréquence et la fonction détermine le paramètre par excitation de l'axe avec différentes fréquences, dans laquelle l'excitation s'effectue de préférence par application d'un signal à un couple de consigne de l'entraînement, en particulier un signal qui présente une pluralité de composantes fréquentielles.

10. Machine-outil selon l'une quelconque des revendications précédentes, dans laquelle, lors de la détection d'un état de serrage insuffisant, la fonction bloque le fonctionnement ultérieur de l'axe et/ou effectue une sortie sur une interface utilisateur de la machine-outil, en particulier une invitation à l'utilisateur à serrer de nouveau l'outil et/ou la pièce.

11. Machine-outil selon la revendication 10, dans laquelle la fonction est configurée de telle sorte que l'utilisateur doit confirmer le nouveau serrage, à la suite de quoi la fonction effectue de nouveau le contrôle de l'état de serrage.

12. Machine-outil selon l'une quelconque des revendications précédentes, dans laquelle une interface utilisateur de la machine-outil est configurée de telle sorte qu'elle invite l'opérateur avant un début de l'usinage à indiquer si l'outil et/ou la pièce a été desserré, dans laquelle la fonction effectue le contrôle de l'état de serrage lorsque l'opérateur entre que l'outil et/ou la pièce a été desserré.

13. Machine-outil selon l'une quelconque des revendications précédentes, dans laquelle le logement d'outil ou de pièce est un logement conique, en particulier un logement à cône à queue creuse ou un logement à cône fort.

14. Programme logiciel pour une machine-outil selon l'une quelconque des revendications précédentes, avec des instructions qui mettent en œuvre la commande de la machine-outil et/ou la fonction pour la surveillance et/ou la vérification de l'état de serrage du logement d'outil ou de pièce sur la commande de la machine-outil lorsqu'elles s'exécutent sur un microprocesseur de la commande.

15. Procédé de fonctionnement d'une machine-outil selon l'une quelconque des revendications précédentes, dans lequel la machine-outil présente un logement, dans lequel un outil ou une pièce peut être serré, dans lequel l'axe est entraîné par l'intermédiaire d'un entraînement,
comprenant les étapes :
- détermination d'au moins un paramètre de l'axe
- surveillance et/ou vérification de l'état de serrage du logement d'outil ou de pièce par évaluation du paramètre.
